# EUROPEAN PATENT APPLICATION

(11) **EP 3 834 923 A1**
(43) Date of publication of application: **16.06.2021**
(21) Application number: 19215247.8
(22) Date of filing: 11.12.2019
(51) Int. Cl.: B01J 8/00, B01J 19/24

(54) **APPARATUS AND PROCESS FOR THE GAS-PHASE POLYMERIZATION**

(71) Applicant: Basell Polyolefine GmbH, 50389 Wesseling (DE)
(72) Inventor: PENZO, Giuseppe, 46100 Mantova (IT); DORINI, Maurizio, 44122 Ferrara (IT); RINALDI, Riccardo, 44122 Ferrara (IT); SOFFRITTI, Silvia, 44122 Ferrara (IT); MEI, Giulia, 44122 Ferrara (IT)
(74) Representative: LyondellBasell

(57) **Abstract**

Apparatus for carrying out a catalytic gas-phase olefin polymerization comprising a first polymerization zone for growing polymer particles to flow upward under fast fluidization or transport conditions, a second polymerization zone for the growing polymer particles to flow downward, and a gas/solid separation zone; wherein the second polymerization zone has an upper part being connected to the separation zone and a lower part being connected to the upper part; wherein the ratio of the height H01 of the separation zone to the diameter D01 of the separation zone is 2.5 to 4.5; and process for carrying out a catalytic gas-phase olefin polymerization in the apparatus.

## Description

### FIELD OF THE INVENTION

The present disclosure provides an apparatus for carrying out a catalytic gas-phase olefin polymerization having at least two interconnected polymerization zones and further provides a process for carrying out a catalytic gas-phase olefin polymerization in this apparatus.

### BACKGROUND OF THE INVENTION

Polyolefins are by far the largest class of synthetic polymers made and used today. Their success is mainly due to low costs of production, light weight and high chemical resistance. A wide range of mechanical properties is possible through the use of copolymerization, blending and additives to make products from elastomers to thermoplastics to high strength fibers. Although well-established since the 1930's, improving the production process and performance of these materials is still the subject of ongoing research.

Today, a widely-used technology for the production of polyolefins is the gas-phase polymerization, in particular fluidized-bed gas-phase processes in which the polymer is confined in a vertical cylindrical zone. Commonly, the reaction gases exiting the reactor are taken up by a compressor, cooled and sent back, together with make-up monomers and appropriate quantities of hydrogen to the bottom of the bed through a distributor. Entrainment of solid to the gas is limited by an appropriate dimensioning of the upper part of the reactor, where the gas velocity is reduced. The flow rate of the circulating gas is set to assure a velocity within an adequate range above the minimum fluidization velocity and below the "transport velocity". The heat of reaction is removed by cooling the circulating gas and the catalyst components may be continuously fed into the polymerization vessel. The composition of the polymer can be controlled by the composition of the gas-phase. However, limits of fluidized-bed processes are the difficulty of controlling the molecular weight distribution of the obtained polymers, in particular when it comes to broadening the molecular weight distribution, or to obtain copolymers having different comonomer compositions. Since the breadth of the molecular weight distribution and the comonomer distribution have an influence on both the rheological behavior of the polymer, and hence the processability of the melt, and on the final mechanical properties of the product, it would be attractive to be able to adapt the structure of the prepared polymers according to need. One major focus of research and industry has therefore been on strategies to be able to influence the composition of polyolefins.

WO 97/04015 refers to a process for the gas-phase polymerization of α-olefins CH₂=CHR, where R is hydrogen or a hydrocarbon radical having 1-12 carbon atoms, carried out in a first and in a second interconnected polymerization zone, to which one or more of said α-olefins are fed in the presence of a catalyst under reaction conditions and from which the polymer product is discharged, wherein the growing polymer particles flow through the first of said polymerization zones under fast fluidization conditions, leave said first polymerization zone and enter the second of said polymerization zones through which the polymer particles flow in a densified form under the action of gravity, leave said second polymerization zone and are at least partially reintroduced into said first polymerization zone, thus establishing a circulation of polymer between the two polymerization zones.

Based on the technology described in WO 97/04015, WO 00/02929 further suggests a process wherein means are provided which are capable of totally or partially preventing the gas mixture present in the riser, i.e. the first polymerization zone, from entering the downcomer, i.e. the second polymerization zone, and a gas and/or liquid mixture having a composition different from the gas mixture present in the riser is introduced into the downcomer in order to achieve in-reactor made blends of polymers having different compositions.

WO 2012/031986 suggests a gas-phase polymerization reactor having interconnected polymerization zones comprising a riser through which the polymer particles flow upward under fast fluidization conditions or transport conditions; and a downcomer through which the polymer particles flow downward in a densified form under the action of gravity, the bottom of said downcomer being connected to the lower region of said riser by means of a transport section, said transport section being designed as a bend descending from the downcomer to the riser; said reactor being further provided with a line for feeding a carrier gas at the inlet of said transport section and with a gas distribution grid extending from the inlet of said transport section for an angle of at least 50° along the bending of said transport section.

Although there has been a continuous development of the gas-phase polymerization, there is still the need for further improvement, in particular with regard to controlling the molecular weight distribution of the polymer.

There is accordingly a need to provide an apparatus for the gas-phase polymerization that allows the production of tailored polymer structures that meet today's demanding processing and product requisites.

### SUMMARY OF THE INVENTION

The present disclosure provides an apparatus for carrying out a catalytic gas-phase olefin polymerization comprising
at least a first polymerization zone adapted and arranged for growing polymer particles to flow upward under fast fluidization or transport conditions and at least a second polymerization zone adapted and arranged for the growing polymer particles to flow downward; and a gas/solid
separation zone having a cylindrical shape; wherein the second polymerization zone has an upper part being connected to the separation zone, a lower part being connected to the upper part and a line for feeding a gas and/or liquid into the second polymerization zone; the first polymerization zone being connected to the separation zone by a connecting part; the lower part of the second polymerization zone being connected to the lower part of the first polymerization zone by a connecting part;
wherein the ratio of the height H01 of the separation zone to the diameter D01 of the separation zone is 2.5 to 4.5, preferably 2.8 to 4.2, more preferably 2.9 to 4.

In some embodiments, the ratio of the diameter D01 of the separation zone to the diameter D03 of the upper part of the second polymerization zone is 1.0 to 1.5, preferably 1.1 to 1.4, more preferably 1.08 to 1.3.

In some embodiments, the height H05 of the upper part of the second polymerization zone (2) is 5000 to 10000 mm, preferably 6000 to 8000 mm, more preferably 6800 to 7200 mm.

In some embodiments, the ratio of the height H05 of the upper part of the second polymerization zone to the diameter D03 of the upper part of the second polymerization zone is 2 to 4, preferably 2 to 3.8, more preferably 2 to 3.6.

In some embodiments, the ratio of the diameter D03 of the upper part of the second polymerization zone to the diameter D04 of the lower part of the second polymerization zone is 1.2 to 2, preferably 1.3 to 1.8, more preferably 1.4 to 1.7.

In some embodiments, the separation zone and the upper part of the second polymerization zone are connected by a first connecting part having a height H02, wherein the diameter of the connecting part constantly decreases from the diameter D01 of the separation zone to the diameter D03 of the upper part of the second polymerization zone.

In some embodiments, the upper part of the second polymerization zone and the lower part of the second polymerization zone are connected by way of a second connecting part having a height H06 wherein the diameter of the connecting part constantly decreases from the diameter D03 of the upper part of the second polymerization zone to the diameter D04 of the lower part of the second polymerization zone.

In some embodiments, the angle A01 of the first connecting part connecting the separation zone to the upper part of the second polymerization zone is 5 to 25°, preferably 8 to 20° and more preferably 10 to 15°.

In some embodiments, the angle A02 of the second connecting part connecting the upper part of the second polymerization zone to the lower part of the second polymerization zone is 5 to 25°, preferably 8 to 20° and more preferably 10 to 15°.

In some embodiments, the height H05' from the bottom tangent line of the upper part of the second polymerization zone to the entrance of the feeding line into the second polymerization zone is 2000 to 6000 mm, preferably 2500 to 5000 mm, more preferably 3000 to 4500 mm.

In some embodiments, the apparatus further comprises at least one of the following:
i) a recycle line connecting the separation zone to one or more points of reintroduction into the connecting part or into the first polymerization zone;
ii) a line for feeding a catalyst into the first polymerization zone;
iii) a line for feeding monomers into the apparatus;
iv) a discharge system for discharging polymer from the second polymerization zone.

The present disclosure further provides a process for carrying out a catalytic gas-phase olefin polymerization in the apparatus of any of claims 1 to 11, comprising feeding one or more olefins into the apparatus, contacting the olefins and a catalyst under reaction conditions in the at least first polymerization zone and the at least second polymerization zone and collecting the polymer product from the at least second polymerization zone, wherein the growing polymer particles flow upward through the first polymerization zone under fast fluidization or transport conditions, leave the first polymerization zone, pass through the gas/solid separation zone and enter the second polymerization zone where the polymer particles flow downward under the action of gravity, leave the second polymerization zone and are at least partially reintroduced into the first polymerization zone, thus establishing a circulation of polymer between the first polymerization zone and the second polymerization zone, wherein the second polymerization zone comprises a bed of densified polymer particles.

In some embodiments, the gas mixture present in the first polymerization zone is completely or partially prevented from flowing down the upper part of the second polymerization zone by introducing a gas or liquid into the second polymerization zone via feeding line; and wherein the gas mixture present in the second polymerization zone differs from the gas mixture present in the first polymerization zone.

In some embodiments, the gas mixture present in the first polymerization zone is prevented from entering the second polymerization zone by introducing the gas or liquid into the upper part of the second polymerization zone over or below the surface of the bed of densified polymer particles.

In some embodiments, the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene.

### BRIEF DESCRIPTION OF THE DRAWINGS

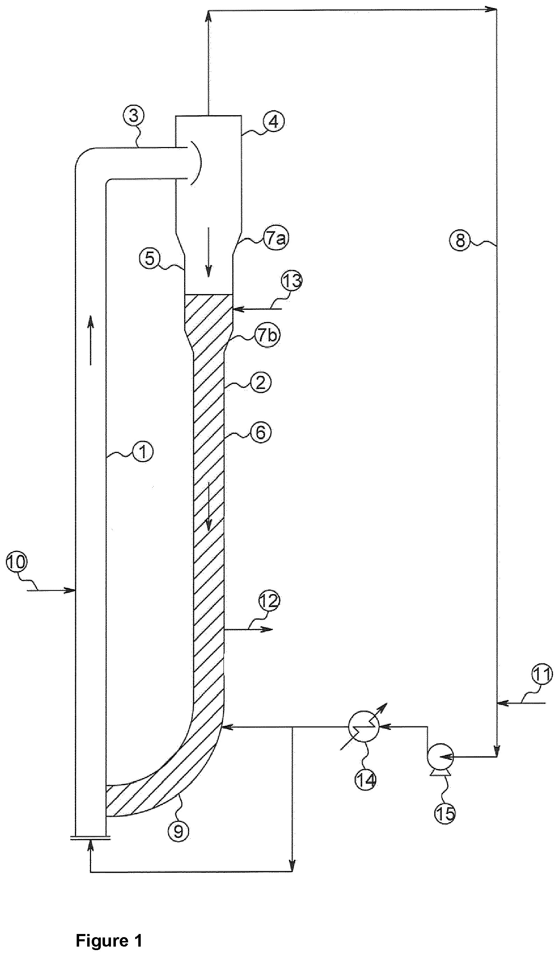

Figure 1 is a diagrammatic representation of one embodiment of the apparatus according to the present disclosure.

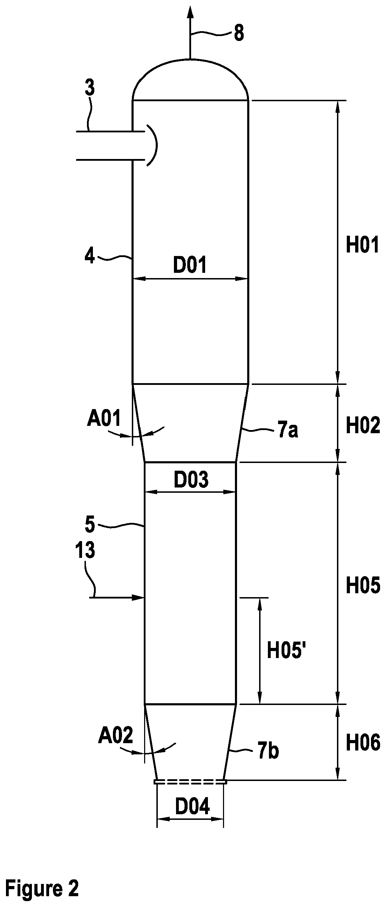

Figure 2 is an enlarged excerpt of the top part of the second polymerization zone (2) showing in detail:
   - a separation zone (4) having a height H01 and a diameter D01;
   - an upper part (5) of the second polymerization zone (2) having a height H05 and diameter D03;
   - a first connecting part (7a) having a height H02 and an associated angle A01; and
   - a second connecting part (7b) having a height H06 and an associated angle A02.

### DETAILED DESCRIPTION OF THE INVENTION

Within the course of the present disclosure, the inventors have found that by adapting the design of apparatuses for carrying out catalytic gas-phase olefin polymerizations comprising a first polymerization zone in which growing polymer particles flow upward under fast fluidization or transport conditions and comprising a second polymerization zone in which the growing polymer particles flow downward, i.e. by adapting the design of so-called multizone circulation reactors (MZCR), and paying special attention to the geometric ratios among the different parts of the apparatuses, the production efficacy of the polymerization, and in particular the control of the molecular weight distribution and the comonomer distribution of the obtained polyolefins can be even further improved.

The present disclosure accordingly provides an apparatus for carrying out a catalytic gas-phase olefin polymerization comprising at least a first polymerization zone (1) having a cylindrical shape adapted and arranged for growing polymer particles to flow upward under fast fluidization or transport conditions and at least a second polymerization zone (2) adapted and arranged for the growing polymer particles to flow downward; and a gas/solid separation zone (4); wherein the second polymerization zone (2) has an upper part (5) being connected to the separation zone (4), a lower part (6) being connected to the upper part (5) and a line (13) for feeding a gas and/or liquid into the second polymerization zone (2); the first polymerization zone (1) being connected to the separation zone (4) by a connecting part (3); the lower part (6) of the second polymerization zone (2) being connected to the lower part of the first polymerization zone (1) by a connecting part (9); wherein the ratio of the height H01 of the separation zone (4) to the diameter D01 of the separation zone (4) is 2.5 to 4.5, preferably 2.8 to 4.2, more preferably 2.9 to 4.

Olefins which may be polymerized in the apparatuses of the present disclosure are especially 1-olefins, i.e. hydrocarbons having terminal double bonds, without being restricted thereto. Preference is given to nonpolar olefinic compounds. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The apparatuses of the present disclosure can be used for the homopolymerization or copolymerization of ethylene or propylene and the apparatuses are in particular suitable for the homopolymerization or copolymerization of ethylene. Preferred comonomers in propylene polymerization are up to 40 wt.% of ethylene, 1-butene and/or 1-hexene, preferably from 0.5 wt.% to 35 wt.% of ethylene, 1-butene and/or 1-hexene. As comonomers in ethylene polymerization, preference is given to using up to 20 wt.%, more preferably from 0.01 wt.% to 15 wt.% and especially from 0.05 wt.% to 12 wt.% of C₃-C₈-1-alkenes, in particular 1-butene, 1-pentene, 1-hexene and/or 1-octene. Particular preference is given to polymerizations in which ethylene is copolymerized with from 0.1 wt.% to 12 wt.% of 1-hexene and/or 1-butene.

Keeping the ratio between the height H01 of the separation zone (4) and the diameter D01 of the separation zone (4) within the claimed ranges allows for an effective separation of the gas/solid mixture introduced into the separation zone (4) from the first polymerization zone (1). Further, it was found that by ensuring a sufficient height and diameter of the separation zone (4), as expressed by the ratio H01/D01, polymer carry-over in the gas leaving the separation zone (4) could be avoided or sensibly reduced, even in cases where the level of the polymer in the second polymerization (2) zone was particularly high.

The concept of the multizone circulating reactor relies on providing multiple reaction zones having different reaction conditions. Since polymerization is carried out in a circular process, separation of the gas mixtures which are present in the first polymerization zone (1) and the second polymerization zone (2) is of utmost importance to ensure an effective process and broad molecular weight distribution. In the course of the present disclosure, it was found that both the needs of limiting the carry-over of polymer in the gas leaving the separation zone (4) and the separation of the gas of polymerization zone (1) from the gas of polymerization zone (2) could be combined by adapting the diameter D01 of the separation zone (4) and the diameter D03 of the upper part (5) of the second polymerization zone (2). In a preferred embodiment, the ratio D01/D03 of the diameter D01 of the separation zone (4) and the diameter D03 of the upper part (5) of the second polymerization zone (2) is therefore 1.0 to 1.5, preferably 1.1 to 1.4, especially preferred 1.08 to 1.3. Keeping the ratio of the diameter D01 of the separation zone (4) and the diameter D03 of the upper part (5) of the second polymerization zone (2) within the claimed limits allows as well to have an efficient gas/solid separation in the separation zone (4) as to ensure a separation of the gas mixture present in the first polymerization zone (1) from the gas within the second polymerization zone (2).

Independently from the polymerization capacity of the apparatuses, the height H05 of the upper part (5) of the second polymerization zone (2) is preferably 5000 to 10000 mm, more preferably 6000 to 8000 mm, and in particular 6800 to 7200 mm. It was found that a height of the upper part (5) of the second polymerization zone (2) within the claimed ranges ensures enough powder residence time for a proper gas separation and enough room for level control and variation at the same time without affecting the efficiency of the gas/solid separation zone (4).

It was further found that the risk of an overflow of the upper part (5) of the second polymerization zone (2), which would negatively affect the separation efficacy of the separation zone (4), could be minimized by not only ensuring a sufficient height of the upper part (5) of the second polymerization zone (2) but also by ensuring a large enough diameter D03 of the upper part (5) of the second polymerization zone (2). In a preferred embodiment, the ratio H05/D03 of the height H05 of the upper part (5) of the second polymerization zone (2) and the diameter D03 of said upper part (5) is 2 to 4, preferably 2 to 3.8, more preferably 2 to 3.6.

One of the characteristics of the MZCR technology is the possibility for an effective separation of the gas mixtures present in the different polymerization zones. Therefore, a lot of effort has been put into increasing the efficacy of said separation. It was now found that the separation of the gas mixture present in the first polymerization zone (1) and the gas mixture present in the second polymerization zone (2) could be even further increased by adapting the design of the second polymerization zone (2). In a preferred embodiment of the present disclosure, the ratio D03/D04 of the diameter D03 of the upper part (5) of the second polymerization zone (2) and the diameter D04 of the lower part (6) of the second polymerization zone (2) is 1.2 to 2, preferably 1.3 to 1.8, more preferably 1.4 to 1.7. This way, a much lower velocity of the solid in the upper part (5) of the second polymerization zone (2), where the barrier gas and/or liquid is introduced, can be maintained than in the lower part (6) of the second polymerization zone (2), avoiding fluidization which would prevent the barrier from being effective.

In preferred embodiments of the present disclosure, the separation zone (4) has a cylindrical shape, i.e. the diameter D01 of the separation zone (4) is constant over the entire height H01 of the separation zone (4) and/or the upper part (5) of the second polymerization zone (2) has a cylindrical shape, i.e. the diameter D03 of the upper part (5) of the second polymerization zone (2) is constant over the entire height H05 of the upper part (5) of the second polymerization zone (2). A constant diameter within the meaning of the present disclosure is to be understood in that the respective diameter deviates from any given value by less than 5%, preferably by less than 2%, more preferably by less than 0.5% and specifically by less than 0.1%.

As described above, the efficacy of the separation of the gas mixtures of the different polymerization zones could be further increased by adapting the design of the second polymerization zone (2). In a preferred embodiment, the separation zone (4) and the upper part (5) of the second polymerization zone (2) are therefore connected by a first connecting part (7a) having a height H02 wherein the diameter of the connecting part (7a) constantly decreases from the diameter D01 of the separation zone (4) to the diameter D03 of the upper part (5) of the second polymerization zone (2), preferably over the total height H02 of the connecting part (7a). The upper part (5) of the second polymerization zone (2) and the lower part (6) of the second polymerization zone are preferably connected by way of a second connecting part (7b) having a height H06 wherein the diameter of the connecting part (7b) constantly decreases from the diameter D03 of the upper part (5) of the second polymerization zone (2) to the diameter D04 of the lower part (6) of the second polymerization zone (2), preferably over the total height H06 of the second connecting part (7b).

Due to the decrease in diameter, the first connecting part (7a) and the second connecting part (7b) of the second polymerization zone (2) each have a conical and/or tronco-conical shape. The angle A01 of the first (tronco-)conically shaped connecting part (7a) is preferably 5 to 25°, preferably 8 to 20° and more preferably 10 to 15°. The angle A02 of the second (tronco-)conically shaped connecting part (7b) is preferably 5 to 25°, preferably 8 to 20° and more preferably 10 to 15°. It was found that a smooth downward flow of the polymer through the second polymerization zone (2) could be ensured when the angles A01 and A02 were kept within the set limits and stagnation of the polymer powder, usually resulting in chunk formation, could be significantly reduced.

Within the MZCR technology, the separation of the multiple reaction zones is achieved by introducing a barrier gas or liquid which prevents the gas mixture of one reaction zone from entering another reaction zone. Within the course of the present disclosure, it was found that the efficacy of the separation could be improved by ensuring a certain distance between the entrance of the feed line for introducing the barrier gas and/or liquid into the second polymerization zone (2) and the bottom tangent line of the upper part (5) of the second polymerization zone (2). Therefore, in a preferred embodiment, the distance H05' from the bottom tangent line of the upper part (5) of the second polymerization zone (2) of the apparatus of the present disclosure to the entrance of the feeding line (13) for feeding a gas and/or liquid into the second polymerization zone (2) is 2000 to 6000 mm, preferably 2500 to 5000 mm, more preferably 3000 to 4500 mm.

In order to ensure smooth and efficient polymerization, the apparatus of the present disclosure preferably further comprises at least one of the following:
i) a recycle line (8) connecting the separation zone (4) to one or more points of reintroduction into the connecting part (9) and/or into the first polymerization zone (1), preferably equipped with a heat exchanger (14) and a compressor (15);
ii) a line (10) for feeding a catalyst into the first polymerization zone (1);
iii) a line (11) for feeding monomers into the apparatus;
iv) a discharge system (12) for discharging polymer from the second polymerization zone (2).

The person skilled in the art is aware that the at least first polymerization zone (1) and the at least second polymerization zone (2) of the apparatus of the present disclosure may be connected in different ways and that more than two polymerization zones may be employed without deviating from the spirit of the present disclosure. Suitable structures and combinations are, for example, described in WO 00/02929 and WO 97/04015.

The present disclosure further provides a process for carrying out a catalytic gas-phase olefin polymerization in the apparatus of the present disclosure. The process comprises the steps of feeding one or more olefins into the apparatus, contacting the olefins and a catalyst under reaction conditions in the at least first polymerization zone (1) and the at least second polymerization zone (2) and collecting the polymer product from the at least second polymerization zone (2), wherein the growing polymer particles flow upward through the first polymerization zone (1) under fast fluidization or transport conditions, leave the first polymerization zone (1), pass through the gas/solid separation zone (4) and enter the second polymerization zone (2) where the polymer particles flow downward under the action of gravity, leave the second polymerization zone (2) and are at least partially reintroduced into the first polymerization zone (1), thus establishing a circulation of polymer between the first polymerization zone (1) and the second polymerization zone (2), wherein the second polymerization zone (2) comprises a bed of densified polymer particles.

In order to broaden the molecular weight distribution of the obtained polyolefins or to obtain copolymers having different comonomer distributions, different polymerization zones are established by preventing the gas mixture present in the first polymerization zone (1) from entering the second polymerization zone (2). Therefore, in a preferred embodiment, the gas mixture present in the first polymerization zone (1) is completely or partially prevented from flowing down the upper part (5) of the second polymerization zone (2) by introducing a barrier gas and/or liquid into the second polymerization zone (2) via a feeding line (13); and wherein the gas mixture present in the second polymerization zone (2) differs from the gas mixture present in the first polymerization zone (1).

In an especially preferred embodiment, the gas mixture present in the first polymerization zone (1) is prevented from entering the second polymerization zone (2) by introducing a gas or a liquid into the upper part (5) of the second polymerization zone (2) over or below the surface of the bed of densified polymer particles.

The present disclosure is explained in more detail by way of the following figures which are in no way to be understood as limiting the scope and spirit of the present disclosure.

### List of reference signs:

- 1: first polymerization zone
- 2: second polymerization zone
- 3: connecting part
- 4: separation zone
- 5: upper part of the second polymerization zone
- 6: lower part of the second polymerization zone
- 7a: first connecting part connecting the separation zone and the upper part of the second polymerization zone
- 7b: second connecting part connecting the upper part and the lower part of the second polymerization zone
- 8: recycle line
- 9: connecting part
- 10: catalyst feeding line
- 11: monomer feeding line
- 12: polymer discharge system
- 13: barrier gas/liquid feeding line
- 14: heat exchanger
- 15: compressor

## Claims

1. An apparatus for carrying out a catalytic gas-phase olefin polymerization comprising
at least a first polymerization zone (1) adapted and arranged for growing polymer particles to flow upward under fast fluidization or transport conditions and at least a second polymerization zone (2) adapted and arranged for the growing polymer particles to flow downward; and a gas/solid separation zone (4) having a cylindrical shape; wherein the second polymerization zone (2) has an upper part (5) being connected to the separation zone (4), a lower part (6) being connected to the upper part (5) and a line (13) for feeding a gas and/or liquid into the second polymerization zone (2); the first polymerization zone (1) being connected to the separation zone (4) by a connecting part (3); the lower part (6) of the second polymerization zone (2) being connected to the lower part of the first polymerization zone (1) by a connecting part (9);
wherein the ratio of the height H01 of the separation zone (4) to the diameter D01 of the separation zone (4) is 2.5 to 4.5, preferably 2.8 to 4.2, more preferably 2.9 to 4.

2. The apparatus of claim 1, wherein the ratio of the diameter D01 of the separation zone (4) to the diameter D03 of the upper part (5) of the second polymerization zone (2) is 1.0 to 1.5, preferably 1.1 to 1.4, more preferably 1.08 to 1.3.

3. The apparatus of claim 1 or 2, wherein the height H05 of the upper part (5) of the second polymerization zone (2) is 5000 to 10000 mm, preferably 6000 to 8000 mm, more preferably 6800 to 7200 mm.

4. The apparatus of any of the forgoing claims wherein the ratio of the height H05 of the upper part (5) of the second polymerization zone (2) to the diameter D03 of the upper part (5) of the second polymerization zone (2) is 2 to 4, preferably 2 to 3.8, more preferably 2 to 3.6.

5. The apparatus of any of the forgoing claims ,wherein the ratio of the diameter D03 of the upper part (5) of the second polymerization zone (2) to the diameter D04 of the lower part (6) of the second polymerization zone (2) is 1.2 to 2, preferably 1.3 to 1.8, more preferably 1.4 to 1.7.

6. The apparatus of any of the forgoing claims, wherein the separation zone (4) and the upper part (5) of the second polymerization zone (2) are connected by a first connecting part (7a) having a height H02, wherein the diameter of the connecting part (7a) constantly decreases from the diameter D01 of the separation zone (4) to the diameter D03 of the upper part (5) of the second polymerization zone (2).

7. The apparatus of any of the forgoing claims, wherein the upper part (5) of the second polymerization zone (2) and the lower part (6) of the second polymerization zone are connected by way of a second connecting part (7b) having a height H06 wherein the diameter of the connecting part (7b) constantly decreases from the diameter D03 of the upper part (5) of the second polymerization zone (2) to the diameter D04 of the lower part (6) of the second polymerization zone (2).

8. The apparatus of any of the forgoing claims, wherein the angle A01 of the first connecting part (7a) connecting the separation zone (4) to the upper part (5) of the second polymerization zone (2) is 5 to 25°, preferably 8 to 20° and more preferably 10 to 15°.

9. The apparatus of any of the forgoing claims, wherein the angle A02 of the second connecting part (7b) connecting the upper part (5) of the second polymerization zone (2) to the lower part (6) of the second polymerization zone (2) is 5 to 25°, preferably 8 to 20° and more preferably 10 to 15°.

10. The apparatus of any of the forgoing claims, wherein the height H05' from the bottom tangent line of the upper part (5) of the second polymerization zone (2) to the entrance of the feeding line (13) into the second polymerization zone (2) is 2000 to 6000 mm, preferably 2500 to 5000 mm, more preferably 3000 to 4500 mm.

11. The apparatus of any of the forgoing claims, wherein the apparatus further comprises at least one of the following:
i) a recycle line (8) connecting the separation zone (4) to one or more points of reintroduction into the connecting part (9) or into the first polymerization zone (1);
ii) a line (10) for feeding a catalyst into the first polymerization zone (1);
iii) a line (11) for feeding monomers into the apparatus;
iv) a discharge system (12) for discharging polymer from the second polymerization zone (2).

12. A process for carrying out a catalytic gas-phase olefin polymerization in the apparatus of any of claims 1 to 11, comprising feeding one or more olefins into the apparatus, contacting the olefins and a catalyst under reaction conditions in the at least first polymerization zone (1) and the at least second polymerization zone (2) and collecting the polymer product from the at least second polymerization zone (2), wherein the growing polymer particles flow upward through the first polymerization zone (1) under fast fluidization or transport conditions, leave the first polymerization zone (1), pass through the gas/solid separation zone (4) and enter the second polymerization zone (2) where the polymer particles flow downward under the action of gravity, leave the second polymerization zone (2) and are at least partially reintroduced into the first polymerization zone (1), thus establishing a circulation of polymer between the first polymerization zone (1) and the second polymerization zone (2), wherein the second polymerization zone (2) comprises a bed of densified polymer particles.

13. The process of claim 12, wherein the gas mixture present in the first polymerization zone (1) is completely or partially prevented from flowing down the upper part (5) of the second polymerization zone (2) by introducing a gas or liquid into the second polymerization zone (2) via feeding line (13); and wherein the gas mixture present in the second polymerization zone (2) differs from the gas mixture present in the first polymerization zone (1).

14. The process of claim 13, wherein the gas mixture present in the first polymerization zone (1) is prevented from entering the second polymerization zone (2) by introducing the gas or liquid into the upper part (5) of the second polymerization zone (2) over or below the surface of the bed of densified polymer particles.

15. The process of any of claims 12 to 14, wherein the polymerization is a homopolymerization of ethylene or a copolymerization of ethylene and one or more other olefins selected from the group consisting of 1-butene, 1-hexene and 1-octene or the polymerization is a homopolymerization of propylene or a copolymerization of propylene and one or more other olefins selected from the group consisting of ethylene, 1-butene and 1-hexene.
